# EUROPEAN PATENT APPLICATION

(11) **EP 4 439 404 A1**
(43) Date of publication of application: **02.10.2024**
(21) Application number: 23165024.3
(22) Date of filing: 29.03.2023
(51) Int. Cl.: G06N 7/01, G06N 3/0442, G06N 20/00, H04W 4/029, G06Q 10/047, G06Q 10/0833

(54) **SEARCH PATH DETERMINING SYSTEM AND METHOD**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A system and computer implemented method for determining a search path for locating a target asset. The method comprising receiving context data from a plurality of context data sources, the context data being associated with the target asset, determining, using a first model, a plurality of search locations comprising geographical locations as associated probability values representing the predicted likelihood of the target asset being located at the geographical locations, and determining, using a second model, a search path based on the geographical locations and associated probabilities. The first model may be a Hidden Markov Model, and the second model may be a Thompson Sampling Multi-Arm Bandit model.

## Description

### TECHNICAL FIELD

The present invention relates to a system and method for determining a search path for locating a target asset. In particular, the present invention relates to a computer implemented method for determining a search path for locating a target asset based on received context data associated with the target asset.

### BACKGROUND

Searching for a missing asset is an age-old problem, be it a missing person, missing vehicle, missing device, or something else entirely. A significant challenge associated with locating missing assets is predicting the most likely location of an asset based on the last known location of the asset and situation-specific conditions. An example of this is searching for a missing person who is lost at sea. The most likely location of the missing person, based on their last-known location, will depend on the prevailing sea conditions (tides/currents) and prevailing wind among other factors. Once the likely locations of the asset have been determined, the next challenge is determining how best to search those locations to find the asset.

The problem becomes a great deal more complicated when extending to more complex scenarios where the underlying conditions are less predictable. For example, for a mobile asset missing in an urban environment, the factors that could influence the likely location of the asset are numerous, and the nature of the influence difficult to predict.

Accordingly, solutions for determining an optimal search path that can leverage a wide range of data from various sources to overcome the above challenges are desirable.

### SUMMARY OF INVENTION

The invention is defined in the independent claims. Optional features are set out in the dependent claims.

According to a first aspect, a computer implemented method for determining a search path for locating a target asset is provided, the method comprising: receiving, via a network connection, context data from a plurality of context data sources, the context data being associated with the target asset; determining a plurality of search locations for the target asset by inputting the received context data into a first model that associates context data with one or more corresponding search locations; wherein each of the plurality of search locations relates to a respective geographical location, and each of the plurality of search locations is associated with a corresponding probability value representing the predicted likelihood that the target asset is located at the respective geographical location; and determining a search path for locating the target asset by inputting the plurality of search locations into a second model that determines an optimum search path based on the geographical locations and their associated probabilities.

In some examples, determining a plurality of search locations for the target asset comprises: inputting a first subset of the received context data into the first model; obtaining, from the first model, a first search location for the target asset based on the input first subset of the received context data, and a first probability value associated with the first search location; inputting one or more further subsets of the received context data into the first model; and obtaining, from the first model, one or more further search locations for the target asset based on the input one or more further subsets of the received context data, and one or more further probability values associated with the one or more further search locations.

In some examples, the received context data includes, for each context data source, an associated reliability score.

In some examples, the method further comprises calculating, for each subset, a subset reliability score based on the reliability scores associated with the respective context data sources of each subset; wherein the two or more subsets of the received context data are input into the first model in order of decreasing subset reliability score; and wherein the corresponding probability values of a plurality of search locations are based on the corresponding subset reliability scores.

In some examples, the received context data comprises one or more of: positioning data, call data, messaging data, cell tower handshake data, wifi connection data, connected service data, vehicle context data.

In some examples, the connected service data comprises one or more of: online messaging data, calendar data, cloud storage data, cloud stored image data, email data, search history data, financial transaction data,, biometric data, device telemetry.

In some examples, the plurality of context data sources includes one or more of: one or more personal electronic devices, one or more IoT devices, one or more vehicle infrastructure devices, and one or more connected services.

In some examples, the one or more personal electronic devices comprises any combination of: one or more smartphones, one or more smartwatches, and one or more biometric sensors; and wherein the one or more IoT devices includes one or more home surveillance devices, and/or one or more smart appliances.

In some examples, the first model comprises one or more of: a Hidden Markov Model, HMM, a Long Short-Term Memory neural network, and a recurrent neural network, RNN; and the second model comprises one or more of: a multi-arm bandit algorithm, a Thompson Sampling algorithm, and a Vehicle Routing Problem algorithm.

In some examples, the method further comprises sending navigation instructions to one or more searcher devices, the navigation instructions being based on the search path.

In some examples, the one or more searcher devices include one or more automated vehicles, one or more automated drones, and/or one or more automated submarines.

In some examples, the navigation instructions comprise a plurality of waypoints corresponding to each of the search locations.

In some examples, the method further comprises: executing by the one or more search devices, the navigation instructions; detecting, by one or more sensors of the one or more search devices, further context data at one or more locations on the search path; receiving the detected further context data from the one or more search devices; and updating the determined search path by inputting the received further context data into the first model.

In some examples, the determining a plurality of search locations and/or the determining a search path are performed in response to a comparison of received context data with historical trends, the historical trends being determined based on previously-received context data.

According to a second aspect, a method of training a model to determine a predicted location of a target asset based on context data associated with the target asset is provided, the method comprising: applying training data to the model, the training data comprising (i) a plurality of previously-determined locations of the target asset and (ii) context data associated with the target asset being located at each of the respective previously-determined locations of the target asset; and training the model according to a machine learning algorithm to determine correlations between the context data and the previously-determined locations.

According to a third aspect, a system for determining a search path for locating a target asset is provided, the system comprising: one or more processors configured to perform the method of any one of the preceding claims.

According to a fourth aspect, a computer-readable storage medium is provided, the computer-readable storage medium comprising instructions which, when executed by a computer, cause the computer to carry out any method according to the present invention.

### BRIEF DESCRIPTION OF THE DRAWINGS

The disclosure will be further described, by way of example only, with reference to the accompanying drawings, in which:
Figure 1 is a schematic showing examples of search patterns used in the prior art.
Figure 2 is a schematic illustrating a system for determining a search path for locating a target asset according to an embodiment of the invention.
Figure 3 is a flowchart illustrating a method for determining a search path for locating a target asset according to an embodiment of the invention.
Figure 4 is a schematic illustrating a system for determining a search path for locating a target asset according to a further embodiment of the invention.
Figure 5 is a flowchart illustrating a method for determining a search path for locating a target asset according to a further embodiment of the invention.
Figure 6 is a schematic of a system for determining a search path for locating a target asset according to an embodiment of the invention.

### DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

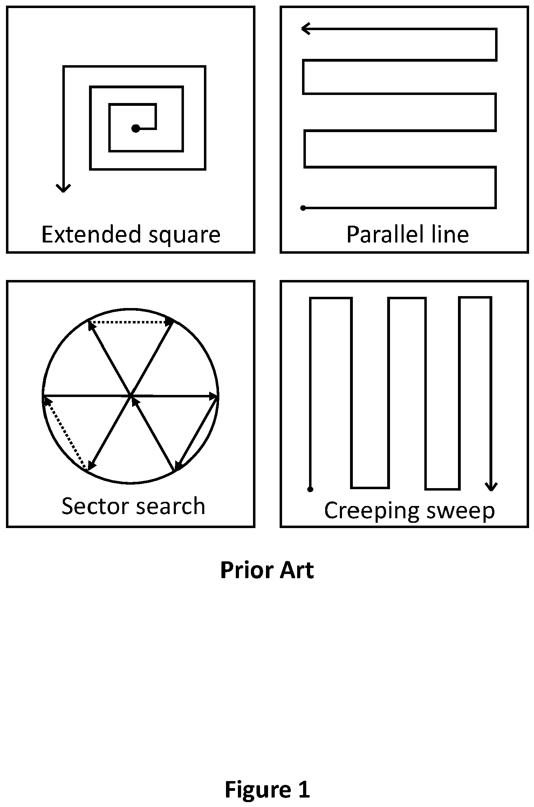

Figure 1 shows some examples of conventional search patterns that may be used to locate a missing asset, such as missing person, depending on specific circumstances. The search patterns illustrated in Figure 1 are all typically used to locate a missing person or vessel at sea, and the choice of which pattern to use depends on a number of factors. For example, if the last known location of the missing person or vessel is accurately known, and there is no significant drift resulting from sea currents or prevailing wind conditions, then the search crew may use an extended square search pattern. Alternatively, if the last known location is accurately known but there is significant drift, then the sector search pattern may be used. On the other hand, if the last known location of the missing person or vessel is not well known, then a parallel line or creeping sweep search pattern may be employed. As appreciated by the present inventors, if more detailed information about the search environment, and expected movement characteristics of the missing asset is available, more targeted search patterns can be used that are likely to locate the missing asset more quickly. The inventors have further appreciated that this concept can be extended and applied in the digital, connected world of today to determine effective search patterns based on context data from numerous sources.

Embodiments of the invention will now be described, throughout the description below, systems and methods of determining a search path for locating a "target asset" are described. A target asset may comprise any missing asset. For example, the target asset may be a missing person, a missing object, a missing vehicle, or a missing device.

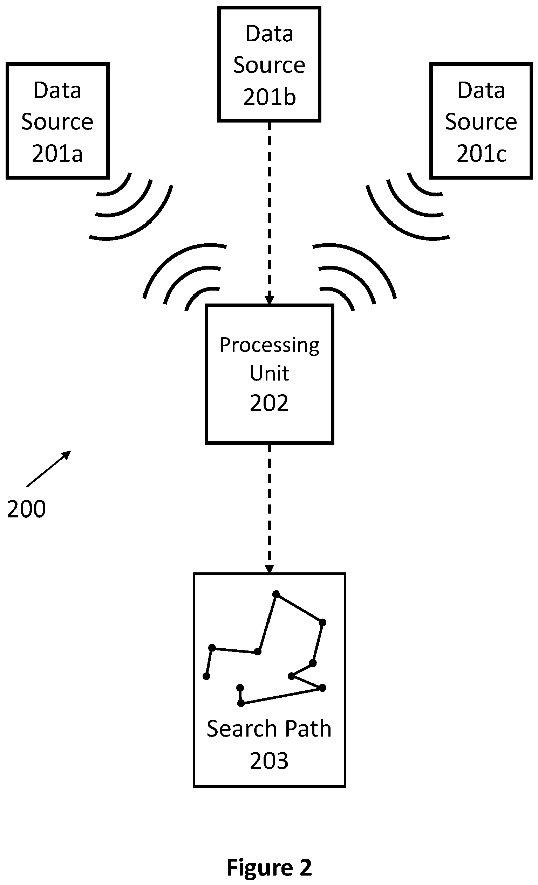

Figure 2 is a schematic showing a system 200 for determining a search path for locating a target asset according to an embodiment of the present invention. The system 200 comprises a processing unit 202, and a plurality of context data sources 201a, 201b, 201c. The processing unit 202 may comprise a receiver configured to receive signals via one or more wireless connections and/or one or more wired connections. As shown in Figure 2, data sources 201a and 201c are wirelessly connected to the processing unit, and data source 201b is connected via a wired connection. The processing unit 202 may further comprise a transmitter configured to transmit signals via one or more wireless connections and/or one or more wired connections. In some embodiments, the receiver and transmitter may be provided as a combined transceiver unit.

The processing unit 202 is configured to receive context data from the data sources 201a, 201b, 201c. The context data sources 201a, 201b, 201c may comprise one or more personal electronic devices, one or more IoT devices, one or more vehicle infrastructure devices and/or one or more connected services. It will be appreciated that this is a non-exhaustive list, and other types of context data sources may equally be used in addition to, or in place of those listed above. Some examples of context data sources 201a, 201b, 201c and types of context data are provided below.

Examples of personal electronic devices include, but are not limited to, smartphones, personal computers, laptops, tablet computers, wearable devices such as smartwatches, and biometric measurement devices such as heart rate measurement devices, pulse oximeters, blood glucose monitors etc.

Examples of IoT devices include, but are not limited to, smart home devices including smart appliances, temperature control systems, home surveillance systems, smart doorbells, smart door locks and other security systems, and smart home voice controllers.

Examples of vehicle infrastructure devices include devices on or within the vehicle itself and exterior vehicle infrastructure devices. Devices that are installed on or within a vehicle include, but are not limited to, vehicle control systems, vehicle navigation systems, dashboard cameras, and vehicle sensors such as speedometers, accelerometers, odometers, etc. Exterior vehicle infrastructure devices include, but are not limited to, traffic monitoring systems including traffic cameras and other traffic monitoring sensors.

Examples of connected services include, but are not limited to messaging services, connected cloud accounts, connected cloud image storage accounts, email accounts, device telemetry, financial services, biometric monitoring accounts, home automation system accounts, and asset usage monitoring data. Connected cloud accounts may include a calendar account, file storage account etc. Connected cloud image storage accounts may include one or more photos uploaded by, or associated with, a target asset. Home automation system accounts may include interfaces to one or more home automation systems including home surveillance systems.

The format and type of context data received by the processing unit 202 will depend on the specific application such as the nature of the target asset and local environment of the search area. The context data is associated with the target asset. The context data may include one or more of: location data, connected service data, call data, messaging data, cell tower handshake data, wifi connection data, and/or vehicle context data. It will be appreciated that this is a non-exhaustive list, and other types of context data may equally be used in addition to, or in place of those listed above.

By way of example, location data may include one or more geospatial locations and one or more timestamps indicating previous locations that the target asset was located and the respective times at which it was located at each location. The geospatial locations may be represented as coordinates, for example longitude and latitude coordinates, or cartesian coordinates relative to a predetermined origin point. Alternatively or additionally, the geospatial locations may be represented as a list of location names representing places that the target asset has previously been located or is expected to be located in the future. The location data may be Global Navigation Satellite System (GNSS) data, such as Global Positioning System (GPS) data received from, for example, a smartphone. The places may be determined by the processing unit 202 based on other received context data or may be predetermined and received by the processing unit 202.

Examples of connected service data include connected cloud account data, social media data, email data, search history data, financial transaction data, biometric data, device telemetry, home automation systems data, asset usage data. By way of example, connected cloud account data may include calendar data including details of calendar appointments and associated locations, cloud storage data including stored files and associated metadata, and cloud storage image data. Social media data may include social media account activity data including contents of social media "posts", and online messages sent to or from a social media account associated with a target asset. Financial transaction data may comprise details of purchases made by, or relating to, a target asset. Device telemetry may include information about the status of a device, such as a battery level, power consumption, current speed, direction of travel etc. Home automation systems data may include data from one or more home automation system interfaces such as a home surveillance system interface. The home automation systems data may include sensor data from one or more home surveillance cameras and one or more motion sensors such as Pyroelectic Infrared Radial (PIR) sensors. Asset usage monitoring data may include details about where and how a target asset has been used. As an illustrative example, where the target asset is a hire vehicle, the asset usage monitoring data may include a location where the hire vehicle was previously obtained by a user, and a location where the hire vehicle was previously released by a user.

Call data may comprise details of one or more phone calls or video calls made by, or received by, a phone or smart phone associated with a target asset. The phone calls or video calls may be made over a terrestrial cellular connection, via an internet connection, or via a satellite connection. The call data may comprise the audio and/or data transmitted via the one or more audio or video calls, and/or data describing the phone number/IP address to which or from which the call was made/received by. Similarly, messaging data may comprise the content of one or more messages sent by, or received by a personal electronic device associated with a target asset. The one or more messages may be Short Message Service (SMS) messages, Multimedia Messaging Service (MMS) messages, and/or messages sent by a third party messaging application installed on the personal electronic device. The one or more messages may be sent or received over a terrestrial cellular connection, via an internet connection, or a satellite connection. The messaging data may further comprise the telephone number/IP address to which or from which the messages were sent/received.

Cell tower handshake data may include details of "handshake" processes executed between a personal electronic device associated with the target asset and one or more cell towers. The "handshake" procedure refers to the process by which a device establishes a connection with a cell tower in order to commence transmitting data via that tower. Typically, as a device traverses a coverage area, it will pass into and out of range of the cell towers covering that area. When the device passes out of range of a first cell tower and into range of a second cell tower, it will cease communicating with the first cell tower and perform the handshake process with the second cell tower. Cell tower handshake data may comprise details of the cell towers that a device associated with the target asset has performed a handshake process with. For each handshake, the details may include the location and/or unique identifier for the cell tower, and the time at which the handshake took place.

Wi-Fi connection data may comprise information describing the one or more Wi-Fi networks to which a device associated with the target asset has been connected. The Wi-Fi connection may comprise the IP address(es) of the one or more Wi-Fi networks, the location(s) of the one or more Wi-Fi networks, and the times during which the device associated with the target asset has been connected to each of the one or more Wi-Fi networks.

Vehicle context data may comprise information indicating the whereabouts of a vehicle associated with the target asset. For example, the vehicle context data may include data from a vehicle navigation system, including a route navigated, or being navigated, by that vehicle and the time of navigation. Alternatively or additionally, vehicle context data may include data from one or more vehicle sensors, indicating a speed, direction of travel, fuel level, fuel level of the vehicle at certain time points. Alternatively or additionally, vehicle context data may comprise information from one or more external vehicle monitoring systems, such as traffic flow monitoring cameras, and the vehicle context data may include information about the speed of traffic flow, and/or volume of traffic at one or more locations.

The processing unit 202 further comprises one or more processors. The one or more processors may be configured to generate further context data based on the context data received by the processing unit 202. For example, the one or more processors may be configured to perform one or more Natural Language Processing (NLP) methods on text content of the received context data to extract location-related information from said text content. By way of example, where the received context data includes SMS messaging data received from a smartphone of a missing person, said SMS messaging data may include a recently-sent message such as *"going to the supermarket on the way home from work*"*.* In this example the one or more processors may be configured to use well-known NLP techniques to extract *"supermarket"* and *"work"* as location related information from this phrase. This location-related information may be used as further location context data when determining search locations and generating a search path. As a further example, the one or more processors may perform one or more algorithms that predict the emotional state of a person based on the content of emails, messages, and/or social media posts and/or biometric data from one or more biometric monitoring devices. The predicted emotional state may be used to predict likely locations that the person will travel to.

As a further example, the one or more processors may perform facial and/or object recognition on images comprised in the received context data to determine whether the target asset is present in the received images. For instance, where the target asset is a missing vehicle, the one or more processors may perform object recognition on images received from traffic flow monitoring cameras to identify one or more images of the missing vehicle in the received images.

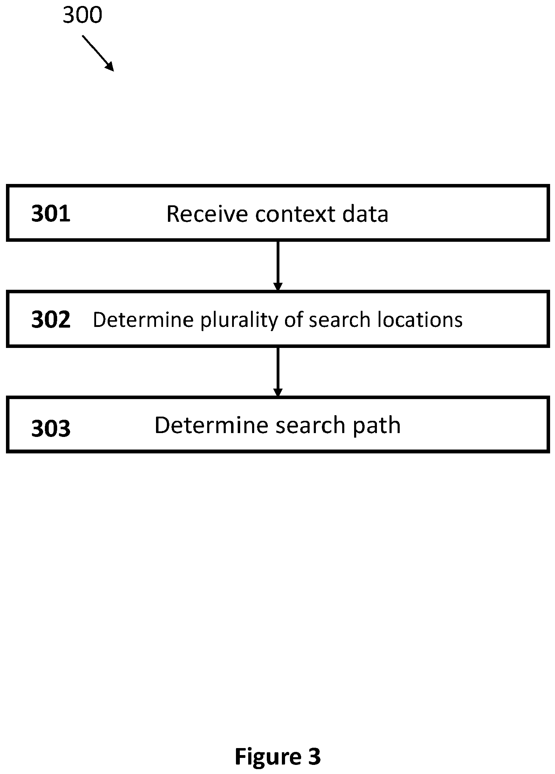

In preferred embodiments, the processing unit 202 further comprises a memory module, and may further comprise a machine learning module configured to implement the first model and second model as described below in connection with Figure 3.

Figure 3 shows a flow diagram of a method 300 for determining a search path for locating a target asset in accordance with embodiments of the present invention. The method 300 may be implemented by system 200 of Figure 2, to which reference will still be made for the purpose of clarity, or by any system in accordance with the present invention. However, it will be appreciated that each method step of method 300 may be performed by any suitable system.

At step 301, the processing unit 202 receives context data from the context data sources 201a, 201b, 201c. As described above, the context data may be received via wireless or wired connection. The context data may include any of the example forms of context data described above, from any suitable context data source.

At step 302, the processing unit 202 determines a plurality of search locations. Each search location of the plurality of search locations relates to a respective geographical location. Each search location is associated with a probability value, which represents the predicted likelihood that the target asset is located at geographic location associated with the particular search location.

The plurality of search locations are determined by inputting the received context data into a first model. The first model associates context data with one or more corresponding search locations, and outputs a search location and a probability value. The search location relates to a geographical location, and may be output in the form of coordinates. The probability value represents the predicted probability that the target asset is located at the associated search location, based on the input context data.

In preferred embodiments, the first model is implemented as a Hidden Markov Model (HMM). HMMs are well-known to the skilled person. HMMs are statistical models that are used to analyse and predict sequences of data. They are used in a wide range of applications, including speech recognition, natural language processing, and bioinformatics.

An HMM consists of two sets of variables: observable variables and hidden variables. The observable variables are the data that are observed or measured, while the hidden variables are the variables that are not directly observable but are assumed to affect the observed data. In the context of the present invention, the hidden variables are the predicted search locations, and the observed variables are the context data received by the processing unit.

The basic idea of an HMM is to model the probability distribution of the observed data as a function of the hidden variables. The model assumes that the hidden variables form a Markov chain, where the current state depends only on the previous state. The probability distribution of the observed data given the hidden variables is modelled as a mixture of probability distributions, where each component is associated with a particular hidden state.

The training of HMMs is well-known to the skilled person. An example of a training algorithm that may be used to train an HMM model is the Baum-Welch algorithm (also known as the forward-backward algorithm), which is an iterative algorithm that maximizes the likelihood of the observed data given the model parameters. Each training iteration consists of two steps: an expectation step (E-step) and a maximisation step (M-step). During the E-step, the algorithm computes the probability of each search location given the context data, which is done using the forward and backward algorithms. The forward algorithm computes the probability of the asset being at a given search location at a given time given all the previous observations, while the backward algorithm computes the probability of observing all subsequent observations given the current location. These probabilities are used to compute the expected number of times (counts) each transition (migration from one hidden state to another) and emission occur, which are used to update the model's parameters. During the M-step, the algorithm updates the model parameters using the expected counts computed in the E-step. The updated parameters maximize the likelihood of the observed data given the model. The algorithm continues iterating between the E-step and the M-step until convergence is reached, meaning the likelihood of the observed data no longer significantly increases with each iteration. Once the model is trained, it can be used to predict the search location and provide the associated probability value based on the input context data.

It will be appreciated that the first model need not necessarily be implemented as an HMM, and other suitable models including Long Short-Term Memory (LSTM) networks, Recurrent Neural Networks (RNNs) and Monte Carlo simulations.

The first model outputs a plurality of search locations, including the associated predicted probability values for each search location.

At step 303, the processing unit 202 determines a search path for locating the target asset. The search path is determined by inputting the determined plurality of search locations into a second model. The search model determines an optimum search path based on the geographic locations and associated predicted probabilities.

In preferred embodiments, the second model is implemented as a multi-armed bandit model using Thompson Sampling (also known as the Bayesian Bandits algorithm). Multi-armed bandit models and Thompson sampling are well-known statistical methods.

In a multi-armed bandit problem, an agent is faced with multiple options, or "arms", and must decide which arm to pull to maximize a reward. In the context of the present invention, each of the "arms" represent a route that traverses each of the geographical locations associated with the plurality of search locations. The reward is calculated based on the predicted probability of locating the target asset, and the estimated travel time for a particular route.

Thompson Sampling is a probabilistic algorithm that balances exploration (trying out different routes) and exploitation (using the route that has worked best in the past). At each step, the algorithm calculates the probability of each route being optimal (based on the calculated reward value) and then chooses an route randomly according to these probabilities.

As the agent explores the different routes, Thompson Sampling updates its probability distribution over the optimal route based on the calculated reward values.

The reward value associated with each route may be calculated based on the estimate time to complete the route, and the estimated time taken to locate the target asset.

The estimated time to complete the route may be calculated using route-planning software, and may depend on how the route is to be executed. For example, if the route is to be completed by an unmanned aerial drone the estimated time to complete the route may be calculated based on the average speed of the unmanned aerial drone, the route distance, and may also depend on environmental conditions such as current wind direction and speed. Calculating the reward value based at least in part on the estimated time to complete the route encourages the Thompson sampling algorithm to favour the shortest (in terms of travel time) and therefore most efficient routes between the search locations.

The estimated time taken to locate the target asset may be calculated based on the probability value associated with each of the geographical locations, and the estimated elapsed time to reach each of the geographical locations by traversing the given route. For example, the calculation may estimate the probability of locating the target asset at the first location of the route, the second location of the route, etc. and combine this with the time taken to travel to the first location, second location etc. Calculating the reward value based at least in part on the estimated time to locate the target asset encourages the Thompson sampling algorithm to favour routes that visit the geographical locations with the highest associated probabilities earlier during the route.

In some embodiments, the reward value may be further based on the estimated probability of locating the target asset. The estimated probability of locating the target asset may be calculated based on the probability values associated with the geographical locations of each of the plurality of search locations, the predicted elapsed time to reach each search location, and the predicted probabilities of the target asset transitioning between search locations. Calculating the reward value based at least in part on the estimated probability of locating the target asset allows the Thompson sampling algorithm to take into account the time-varying nature of the predicted asset location - that is the chances of the target asset changing locations while the search path is being executed. This can improve performance where two or more of the search locations have been identified by the first model as being closely linked - which indicates that the target asset often travels between those search locations. In embodiments where the first model is an HMM, these probabilities are reflected in the transition probabilities between the hidden states.

It will be appreciated that the second model need not necessarily be limited to a Thompson Sampling Multi-Armed Bandit model, and that other suitable models including, but not limited to travelling salesman algorithms, Vehicle Routing Problem (VRP) algorithms, and neural network models could be used that are well-known to the skilled person.

The second model outputs the determined search path, which represents the optimum route between each of the plurality of determined search locations.

As will be described below, the processing unit 202 may determine navigation instructions based on the determined search path, and send those navigation instructions to one or more searcher devices such as one or more unmanned aerial drones, unmanned vehicles, unmanned submarines etc. The navigation instructions may comprise a plurality of waypoints, and an order in which the one or more searcher devices should travel to each of the plurality of waypoints.

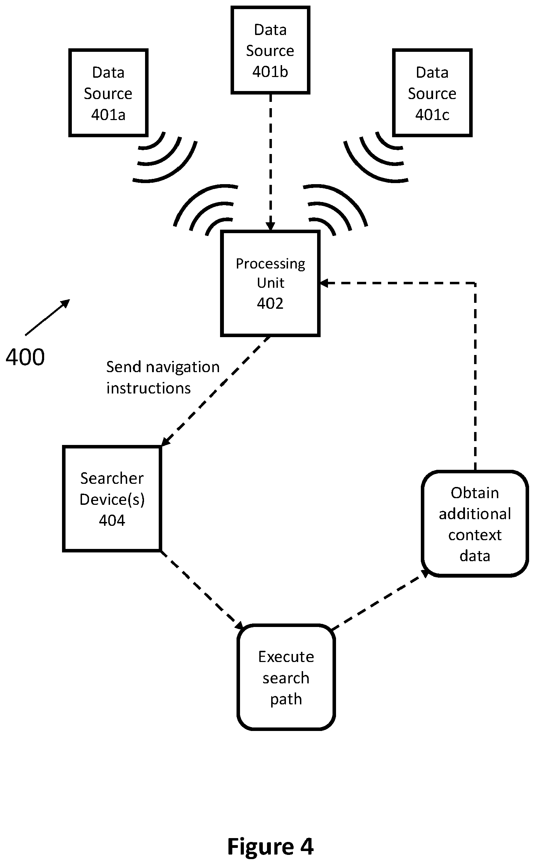

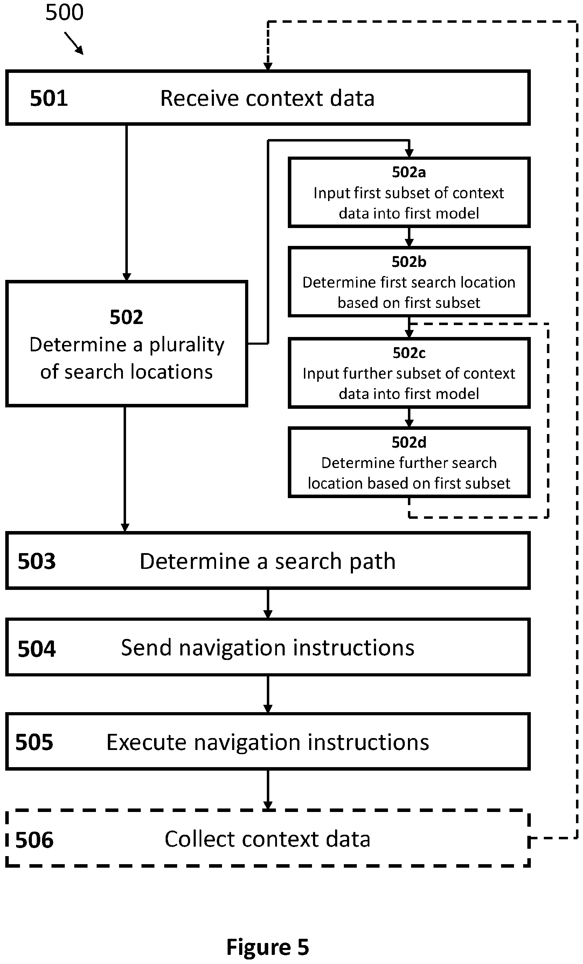

Figure 4 and Figure 5 show a schematic of a system 400 and method 500 for determining a search path for locating a target asset in accordance with an embodiment of the present invention.

The system 400 is configured as in much the same way as system 200 described above, and includes a processing unit 402 configured to receive context data from a plurality of context data sources 401a, 401b, 401c via one or more wireless or wired connections.

The system 400 further comprises one or more searcher devices 404. The one or more searcher devices are configured to receive navigation instructions from the processing unit 402, and execute the received navigation instructions. The one or more searcher devices may include one or more unmanned vehicles, unmanned aerial drones, unmanned boats, and/or unmanned submersible vehicles such as submarines. Alternatively or additionally, the one or more searcher devices may include one or more devices installed in human-operated vehicles, the devices configured to provide navigation instructions to the human operator to enable them to execute the navigation instructions using the human operated vehicles.

The one or more searcher devices 404 preferably include one or more context sensors configured to collect further context data while the one or more searcher devices execute navigation instructions corresponding to a search path 403 determined by the system 400. As shown in Figure 4 and described below in connection with method 500, the collected further context data may be sent to the processing unit 402, and input into the first model to update the plurality of search locations, and then the updated plurality of search locations input into the second model to update the determined search path.

Figure 5 shows a method for determining a search path for locating a target asset in accordance with an embodiment of the present invention. The method 500 may be performed by any system in accordance with the present invention, or any other suitable system.

At step 501, context data is received. This may be performed as described above in connection with method 300.

At step 502, a plurality of search locations are determined based on the received context data. As described above in connection with method 300, the plurality of search locations are determined by inputting the received context data into a first model, which may be an HMM.

In some embodiments, each context data source 401a, 401b, 401c is associated with a reliability score. The reliability score may be a predetermined value that represents how reliably context data received from the respective context data source 401a, 401b, 401c represents the location of the target asset. For example, where the target asset is a missing person, it may be determined that GNNS (e.g. GPS) data received from a smartphone known to be owned by the missing person is a reliable indicator of the location of the missing person, and therefore may be assigned a high reliability score. On the other hand, it may be determined that a predicted emotional state of the missing person based on the content of recent social media posts and biometric data received from one or more biometric sensors worn by the missing person is not a reliable indicator of the location of the missing person, and may be assigned a low reliability score.

Determining 502 a plurality of search locations may comprise inputting 502a a first subset of context data into the first model. The first subset of context data may comprise context data from context data sources with the highest associated reliability scores. For example, where the target asset is a missing vehicle, the first subset of context data may comprise location data received from the missing vehicle, and telemetry data received from one or more of the vehicle sensors of the missing vehicle.

In some embodiments, the subsets of context data may be determined by combining context data from different context sources 401a, 401b, 401c and calculating a subset reliability score based on the reliability scores of the selected context data sources 401a, 401b, 401c. The subset reliability score may for example be an average, or a weighted average of the reliability scores of each context data source 401a, 401b, 401c in the subset.

The first model determines 502b a first search location based on the input first subset of context data. As described above, the first search location is associated with a geographical location and a probability value representing the predicted likelihood that the target asset is located at the geographical location based on the first subset of context data. The probability value may be calculated based on the reliability scores of the context data sources 401a, 401b, 401c, for example based on the calculated subset reliability score.

At steps 502c and 502d, one or more further subsets of context data are input into the first model to determine one or more further search locations comprised in the plurality of search locations.

At step 503, a search path is determined by inputting the determined plurality of search locations into a second model. This may be performed as described above in relation to method 300.

At step 504, navigation instructions are determined based on the search path. In preferred embodiments, the navigation instructions comprise a plurality of waypoints, and an associated order in which the plurality of waypoints are to be visited. The determined navigation instructions are sent to one or more searcher vehicles via one or more wireless or wired connections. As described above, the one or more searcher vehicles may comprise one or more unmanned vehicles, unmanned aerial drones, unmanned boats, and/or unmanned submersible vehicles such as submarines. Alternatively or additionally, the one or more searcher devices may include one or more devices installed in human-operated vehicles, the devices configured to provide navigation instructions to the human operator to enable them to execute the navigation instructions using the human operated vehicles.

The one or more searcher devices include one or more context sensors configured to collect further context data while the one or more searcher devices execute the navigation instructions. The one or more context sensors may include, by way of example, one or more cameras, one or more microphones, one or more ambient light sensors, one or more temperature sensors, and/or one or more weather sensors. The one or more context sensors are also used to find and identify the target asset.

At step 505, the one or more searcher devices execute the navigation instructions. Executing the navigation instructions causes the one or more searcher devices to traverse the determined search path, thereby visiting each of the plurality of search locations in the order determined by the second model.

In some embodiments, the one or more searcher devices are configured to collect 506 further context data while executing 505 the navigation instructions. The collected further context data is then input into the first model to update the plurality of search locations. The updated plurality of search locations is then input into the second model to update the search path. Based on the updated search path, updated navigation instructions may be sent to the one or more searcher devices for execution. For example, the collected further context data may indicate that a search location is inaccessible. The one or more searcher devices send this information back to the processing unit 402, which uses the collected further context data to update the plurality of search locations, and update the search path to avoid the inaccessible search location.

By way of further example, where the target asset is a missing vehicle, the one or more searcher devices may execute navigation instructions causing the one or more searcher devices to travel to a first search location. The method may have previously determined that there are two roads by which the missing vehicle can travel from the first search location to a second search location, wherein one road is a short road, and one is a long road. Based on this, the first model may determine that the missing vehicle is likely to have travelled via the short road from the first search location to the second search location, and the second model may determine a search path that travels from the first search location to the second search location along the short road. When travelling from the first search location to the second search location, the one or more searcher devices may determine that the short road is blocked by an obstruction.

In some embodiments, the method 300, 500 may further comprise comparing received context data with historical trends to trigger the determination of search locations and/or determination of a search path. Historical trends may be determined, for example, by calculating time-averaged values of certain parameters. Alternatively, the historical trends may be determined based on a learned asset behaviour model. The learned asset behaviour model is a model that represents the typical day-to-day behaviour of the target asset. The learned asset behaviour model may be determined by analysing previously-received context data. Preferably, the learned asset behaviour model is a trained machine learning model. In some embodiments, the learned asset behaviour model may be implemented as the first model described above. In alternative embodiments, the learned asset behaviour model may be implemented as a separate trained machine learning model, such as a neural network model. To trigger the determination of a plurality of search locations, or the determination of a search path, the received context data is compared with the learned asset behaviour model to determine whether the current status (behaviour) of the target asset indicates that the target asset is missing. If the comparison indicates that the target asset is missing, the method triggers the search path determination method 300, 500 as described above to generate a search path for locating the target asset. As an example, where the target asset is a person, received context data may comprise connected services data including video data captured by a home surveillance system. The learned asset behaviour model may indicate that the person usually arrives home before 8pm on any working day. Analysis of the received context data may indicate that the person has not arrived home at 10pm. A comparison between the received context data and the learned asset behaviour model therefore indicates that the person is missing, and the system triggers the search path determination method.

The method may further comprise utilising additional received context data to determine not to trigger the search path determination method, even when comparison with the learned behaviour model indicates the target asset is missing. Using the example above, the method may further comprise receiving connected services data including calendar data. Analysis of the calendar data by the system indicates that the person has a calendar appointment titled "concert" scheduled at 8pm on the current day. Based on this analysis, the system may determine that there is a reasonable explanation for the deviation from the asset behaviour model, and the system may determine not to trigger the search path determination method, even though comparison with the learned asset behaviour model indicates that the person is missing.

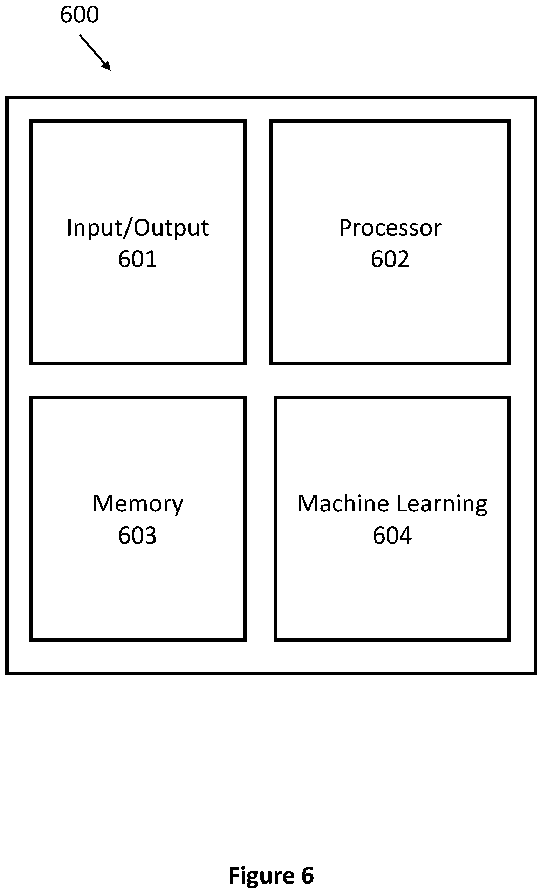

Figure 6 shows a schematic of a processing unit 600 in accordance with an embodiment of the present invention. The processing unit 600 includes an input/output module 601. The input/output module 601 is preferably a transceiver unit configured to transmit and receive signals to/from the processing unit 600. The transceiver unit may be connected to one or more antennas, and may transmit and receive wireless signals via the one or more antennas. Alternatively or additionally, the transceiver unit may be connected to one or more wired connections, via which signals may be transmitted or received. The processing unit 600 further comprises one or more processors 602. The one or more processors 602 preferably comprise one or more Central Processing Units (CPU) and/or Graphics Processing Units (GPU). The processing unit 600 further comprises a memory module 603. The memory module 603 preferably comprises a computer-readable storage medium for storing computer-readable instructions and data. The computer-readable storage medium may be a non-tangible computer-readable storage medium. In some embodiments, the processing module 600 comprises a dedicated machine learning module 604. The dedicated machine learning module 604 includes dedicated processing and/or memory hardware for implementing the machine learning models (e.g. the first model and/or the second model) of the present invention. In alternative embodiments, the processing unit 600 may not comprise a dedicated machine learning module 604, and the functionality thereof may be provided by the one or more processors 602 and memory module 603.

In some embodiments, the processing unit 202, 402, 600 may be provided as a smart home hub. The smart home hub may be connected via a local network to one or more IoT devices located within a local area, for example a person's home. The smart home hub may also be connected to data sources outside the local network, such as the internet, via a wireless or wired network connection. Accordingly, the smart home hub may be configured to receive context data from the one or more IoT devices via the local network, and/or from one or more further context data sources via the wired or wireless network connection.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network personal computers (PCs), minicomputers, mainframe computers, distributed computing environments that include any of the above systems or devices, and the like. Hardware modules or apparatuses described in this disclosure include, but are not limited to, application- specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation, microphones, buttons, keypads, touchscreens, touchpads, trackballs, joysticks and mice. User output devices can include, without limitation, speakers, buzzers, display screens, projectors, indicator lights, haptic feedback devices and refreshable braille displays. User interface devices can comprise one or more user input devices, one or more user output devices, or both.

## Claims

1. A computer implemented method for determining a search path for locating a target asset, the method comprising:
receiving, via a network connection, context data from a plurality of context data sources, the context data being associated with the target asset;
determining a plurality of search locations for the target asset by inputting the received context data into a first model that associates context data with one or more corresponding search locations; wherein each of the plurality of search locations relates to a respective geographical location, and each of the plurality of search locations is associated with a corresponding probability value representing the predicted likelihood that the target asset is located at the respective geographical location; and
determining a search path for locating the target asset by inputting the plurality of search locations into a second model that determines an optimum search path based on the geographical locations and their associated probabilities.

2. The method of claim 1, wherein determining the plurality of search locations for the target asset comprises:
inputting a first subset of the received context data into the first model;
obtaining, from the first model, a first search location for the target asset based on the input first subset of the received context data, and a first probability value associated with the first search location;
inputting one or more further subsets of the received context data into the first model; and
obtaining, from the first model, one or more further search locations for the target asset based on the input one or more further subsets of the received context data, and one or more further probability values associated with the one or more further search locations.

3. The method of claim 1 or claim 2, wherein the received context data includes, for each context data source, an associated reliability score.

4. The method of claim 3, further comprising calculating, for each subset, a subset reliability score based on the reliability scores associated with the respective context data sources of each subset; wherein the two or more subsets of the received context data are input into the first model in order of decreasing subset reliability score; and wherein the corresponding probability values of a plurality of search locations are based on the corresponding subset reliability scores.

5. The method of any one of the preceding claims, wherein the received context data comprises one or more of: positioning data, call data, messaging data, cell tower handshake data, wifi connection data, connected service data, vehicle context data.

6. The method of claim 5, wherein the connected service data comprises one or more of: online messaging data, calendar data, cloud storage data, cloud stored image data, email data, search history data, financial transaction data,, biometric data, device telemetry.

7. The method of any one of the preceding claims, wherein the plurality of context data sources includes one or more personal electronic devices, one or more IoT devices, and one or more connected services.

8. The method of claim 7, wherein the one or more personal electronic devices comprises any combination of: one or more smartphones, one or more smartwatches, and one or more biometric sensors; and wherein the one or more IoT devices includes one or more home surveillance devices, and/or one or more smart appliances.

9. The method of any one of the preceding claims, wherein:
the first model comprises one or more of: a Hidden Markov Model, HMM, a Long Short-Term Memory neural network, and a recurrent neural network, RNN; and
the second model comprises one or more of: a multi-arm bandit algorithm, a Thompson Sampling algorithm, and a Vehicle Routing Problem algorithm.

10. The method of any one of the preceding claims, the method further comprising sending navigation instructions to one or more searcher devices, the navigation instructions being based on the search path and preferably comprise a plurality of waypoints corresponding to each of the search locations; and wherein the one or more searcher devices optionally include one or more automated vehicles, one or more automated drones, and/or one or more automated submarines.

11. The method of claim 10, further comprising:
executing by the one or more search devices, the navigation instructions;
detecting, by one or more sensors of the one or more search devices, further context data at one or more locations on the search path;
receiving the detected further context data from the one or more search devices; and
updating the determined search path by inputting the received further context data into the first model.

12. The method of any one of the preceding claims, wherein:
the determining a plurality of search locations and/or the determining a search path are performed in response to a comparison of received context data with historical trends, the historical trends being determined based on previously-received context data.

13. A method of training a model to determine a predicted location of a target asset based on context data associated with the target asset, the method comprising:
applying training data to the model, the training data comprising (i) a plurality of previously-determined locations of the target asset and (ii) context data associated with the target asset being located at each of the respective previously-determined locations of the target asset; and
training the model according to a machine learning algorithm to determine correlations between the context data and the previously-determined locations.

14. A system for determining a search path for locating a target asset, the system comprising one or more processors configured to perform the method of any one of the preceding claims.

15. A computer-readable storage medium comprising instructions which, when executed by a computer, cause the computer to carry out the method of any one of claims 1 to 13.
